# EUROPEAN PATENT APPLICATION

(11) **EP 4 625 111 A1**
(43) Date of publication of application: **01.10.2025**
(21) Application number: 25165738.3
(22) Date of filing: 24.03.2025
(51) Int. Cl.: G06F 1/3206, G06F 1/324, G06F 1/3287, G06F 1/3293, G06F 1/3296, G06F 1/20

(54) **APPARATUS, SYSTEM AND METHOD OF MULTICORE PROCESSOR POWER CONTROL**

(30) Priority: 28.03.2024 US 202418620003
(71) Applicant: INTEL Corporation, Santa Clara, CA 95054 (US)
(72) Inventor: DRAGHI, Louis, Hillsboro, 97124 (US); RAGLAND, Daniel, Sherwood, 97140 (US); OREN, Omer, 15260 Sde Ilan (IL)
(74) Representative: 2SPL Patentanwälte PartG mbB

(57) **Abstract**

For example, a power controller of a multicore processor may be configured to selectively trigger thermal throttling of one or more cores of the multicore processor. For example, the power controller may be configured to process temperature measurement information, for example, to identify a plurality of temperature measurements corresponding to the plurality of cores. For example, the power controller may be configured to identify one or more selected cores to be thermally-throttled, for example, based on the plurality of temperature measurements. For example, the power controller may be configured to trigger thermal throttling of the one or more selected cores, for example, while allowing one or more non-selected cores of the plurality of cores to remain non-thermally-throttled.

## Description

### BACKGROUND

There may be a need to control a power setting for a processor, for example, to control the temperature of the processor, for example, due to safety and/or performance requirements.

### BRIEF DESCRIPTION OF THE DRAWINGS

For simplicity and clarity of illustration, elements shown in the figures have not necessarily been drawn to scale. For example, the dimensions of some of the elements may be exaggerated relative to other elements for clarity of presentation. Furthermore, reference numerals may be repeated among the figures to indicate corresponding or analogous elements. The figures are listed below.
Fig. 1 is a schematic block diagram illustration of a computing device, in accordance with some demonstrative aspects.
Fig. 2 is a schematic illustration of a graph depicting temperatures and frequencies of a plurality of cores of a multicore processor in case throttling is applied to all of the cores together, to illustrate one or more technical aspects, which may be addressed in accordance with some demonstrative aspects.
Fig. 3 is a schematic illustration of a graph depicting temperatures and frequencies of a plurality of cores of a multicore processor according to a selective thermal throttling scheme, in accordance with some demonstrative aspects.
Fig. 4 is a schematic illustration of a power controller to control a plurality of cores of a multicore processor according to a selective thermal throttling scheme, in accordance with some demonstrative aspects.
Fig. 5 is a schematic illustration of a user interface, in accordance with some demonstrative aspects.
Fig. 6 is a schematic flow-chart illustration of a method multicore processor power control, in accordance with some demonstrative aspects.
Fig. 7 is a schematic illustration of a product of manufacture, in accordance with some demonstrative aspects.

### DETAILED DESCRIPTION

In the following detailed description, numerous specific details are set forth in order to provide a thorough understanding of some aspects. However, it will be understood by persons of ordinary skill in the art that some aspects may be practiced without these specific details. In other instances, well-known methods, procedures, components, units and/or circuits have not been described in detail so as not to obscure the discussion.

Discussions herein utilizing terms such as, for example, "processing", "computing", "calculating", "determining", "establishing", "analyzing", "checking", or the like, may refer to operation(s) and/or process(es) of a computer, a computing platform, a computing system, or other electronic computing device, that manipulate and/or transform data represented as physical (e.g., electronic) quantities within the computer's registers and/or memories into other data similarly represented as physical quantities within the computer's registers and/or memories or other information storage medium that may store instructions to perform operations and/or processes.

The terms "plurality" and "a plurality", as used herein, include, for example, "multiple" or "two or more". For example, "a plurality of items" includes two or more items.

References to "one aspect", "an aspect", "demonstrative aspect", "various aspects" etc., indicate that the aspect(s) so described may include a particular feature, structure, or characteristic, but not every aspect necessarily includes the particular feature, structure, or characteristic. Further, repeated use of the phrase "in one aspect" does not necessarily refer to the same aspect, although it may.

As used herein, unless otherwise specified the use of the ordinal adjectives "first", "second", "third" etc., to describe a common object, merely indicate that different instances of like objects are being referred to, and are not intended to imply that the objects so described must be in a given sequence, either temporally, spatially, in ranking, or in any other manner.

Some aspects may be used in conjunction with various devices and systems, for example, a computing device, an electronic device, an electrical device, a User Equipment (UE), a Mobile Device (MD), a wireless station (STA), a Personal Computer (PC), a desktop computer, a mobile computer, a laptop computer, a notebook computer, a tablet computer, a handheld computer, a sensor device, an Internet of Things (IoT) device, a wearable device, a handheld device, a Personal Digital Assistant (PDA) device, a handheld PDA device, a vehicular device, a non-vehicular device, a mobile or portable device, a consumer device, a non-mobile or non-portable device, a wireless communication station, a wireless communication device, a wireless Access Point (AP), a wired or wireless router, a wired or wireless modem, a video device, an audio device, an audio-video (A/V) device, and the like.

As used herein, the term "circuitry" may refer to, be part of, or include, an Application Specific Integrated Circuit (ASIC), an integrated circuit, an electronic circuit, a processor (shared, dedicated or group), and/or memory (shared, Dedicated, or group), that execute one or more software or firmware programs, a combinational logic circuit, and/or other suitable hardware components that provide the described functionality. In some aspects, some functions associated with the circuitry may be implemented by, one or more software or firmware modules. In some aspects, circuitry may include logic, at least partially operable in hardware.

The term "logic" may refer, for example, to computing logic embedded in circuitry of a computing apparatus and/or computing logic stored in a memory of a computing apparatus. For example, the logic may be accessible by a processor of the computing apparatus to execute the computing logic to perform computing functions and/or operations. In one example, logic may be embedded in various types of memory and/or firmware, e.g., silicon blocks of various chips and/or processors. Logic may be included in, and/or implemented as part of, various circuitry, e.g. radio circuitry, receiver circuitry, control circuitry, transmitter circuitry, transceiver circuitry, processor circuitry, and/or the like. In one example, logic may be embedded in volatile memory and/or non-volatile memory, including random access memory, read only memory, programmable memory, magnetic memory, flash memory, persistent memory, and the like. Logic may be executed by one or more processors using memory, e.g., registers, stuck, buffers, and/or the like, coupled to the one or more processors, e.g., as necessary to execute the logic.

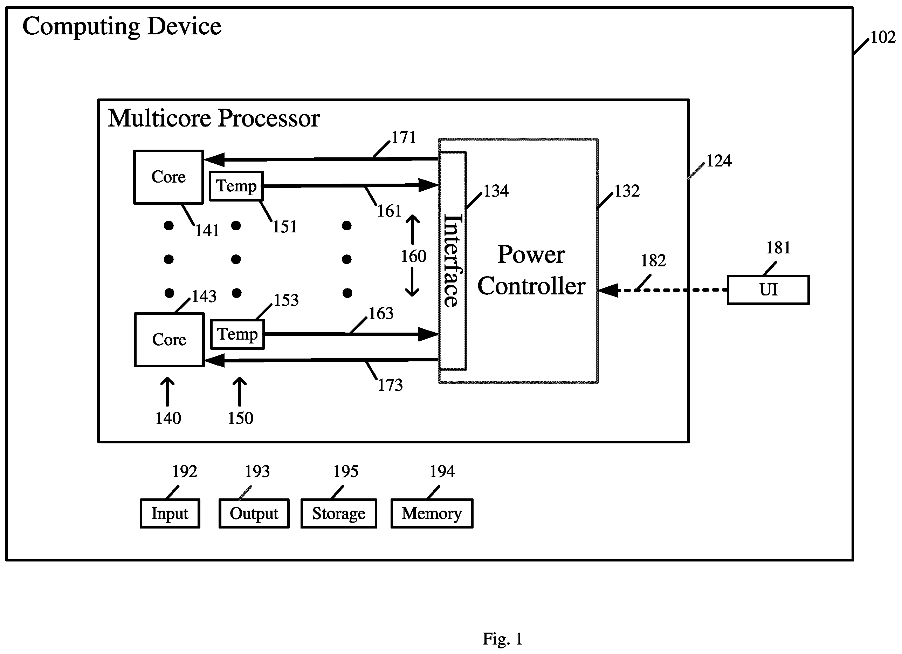

Reference is now made to Fig. 1, which schematically illustrates a block diagram of a computing device 102, in accordance with some demonstrative aspects.

In some demonstrative aspects, computing device 102 may include an electrical device, an electronic device, a mobile device, a non-mobile device, a computer device, a wireless communication device, or the like.

In some demonstrative aspects, device 102 may include, for example, a UE, a mobile phone, an MD, a PC, a desktop computer, a mobile computer, a laptop computer, an Ultrabook^{™} computer, a notebook computer, a tablet computer, a server computer, a handheld computer, an Internet of Things (IoT) device, a sensor device, a handheld device, a wearable device, a PDA device, a handheld PDA device, an on-board device, an off-board device, a hybrid device (e.g., combining cellular phone functionalities with PDA device functionalities), a consumer device, an electrical device, a vehicular device, a non-vehicular device, a mobile or portable device, a non-mobile or non-portable device, a mobile phone, a cellular telephone, a PCS device, a PDA device which incorporates a wireless communication device, a mobile or portable GPS device, a relatively small computing device, a non-desktop computer, a "Carry Small Live Large" (CSLL) device, an Ultra Mobile Device (UMD), an Ultra Mobile PC (UMPC), a Mobile Internet Device (MID), or the like.

In some demonstrative aspects, device 102 may include a multicore processor 124, which may include a plurality of processing cores ("cores") 140, e.g., as described below.

In some demonstrative aspects, multicore processor 124 may include, for example, a Central Processing Unit (CPU), a Digital Signal Processor (DSP), a Graphics Processing Unit (GPU), a general purpose processor, an embedded processor, a network processor, a server processor, a mobile processor, a desktop processor, a microprocessor, a host processor, a controller, a chip, a microchip, one or more circuits, circuitry, a logic unit, an Integrated Circuit (IC), an Application-Specific IC (ASIC), a System on Chip (SoC), and/or any other suitable multi-purpose or specific processor or controller. In one example, multicore processor 124 may execute instructions, for example, of an Operating System (OS) of device 102 and/or of one or more suitable applications.

In some demonstrative aspects, device 102 may include an input unit 192, an output unit 193, a memory unit 194, and/or a storage unit 195. Device 102 may optionally include other suitable hardware components and/or software components. In some demonstrative aspects, some or all of the components of one or more of device 102 may be enclosed in a common housing or packaging, and may be interconnected or operably associated using one or more wired or wireless links. In other aspects, components of one or more of device 102 may be distributed among multiple or separate devices.

In some demonstrative aspects, input unit 192 may include, for example, a keyboard, a keypad, a mouse, a touch-screen, a touch-pad, a track-ball, a stylus, a microphone, and/or other suitable pointing device or input device. Output unit 193 and/or output unit 183 may include, for example, a monitor, a screen, a touch-screen, a flat panel display, a Light Emitting Diode (LED) display unit, a Liquid Crystal Display (LCD) display unit, a plasma display unit, one or more audio speakers or earphones, and/or other suitable output devices.

In some demonstrative aspects, memory unit 194 includes, for example, a Random Access Memory (RAM), a Read Only Memory (ROM), a Dynamic RAM (DRAM), a Synchronous DRAM (SD-RAM), a flash memory, a volatile memory, a non-volatile memory, a cache memory, a buffer, a short term memory unit, a long term memory unit, or other suitable memory units. Storage unit 195 may include, for example, a hard disk drive, a disk drive, a solid-state drive (SSD), and/or other suitable removable or non-removable storage units. Memory unit 194 and/or storage unit 195, for example, may store data processed by multicore processor 124, and/or one or more other processors of device 102.

In some demonstrative aspects, device 102 may include a power controller 132, which may be configured to control and/or manage a power of the multicore processor 124, e.g., as described below.

In some demonstrative aspects, power controller 132 may be configured to manage the power and performance of the multicore processor 124, e.g., as described below.

In some demonstrative aspects, power controller 132 may include, or may be implemented by, a Power Control Unit (PCU), a Power Unit (P-Unit), a power management controller, and/or any other suitable controller unit, module, and/or component.

In some demonstrative aspects, as shown in Fig. 1, power controller 132 may be implemented as part of, e.g., integrated as part of, multicore processor 124, e.g., as described below.

For example, power controller 132 may be implemented together with cores 140, for example, as part of a same chip, IC, SoC, package, or the like.

For example, power controller 132 may be implemented by one or more internal microcontrollers of the multicore processor 124. For example, power controller 132 may be implemented by one or more internal microcontrollers, which may have firmware configured for managing one or more power management flows of the multicore processor 124.

In other aspects, power controller 132 may be implemented separately from the multicore processor 124. For example, power controller 132 and multicore processor 124 may be implemented as separate elements of device 102. In one example, power controller 132 and multicore processor 124 may be implemented on a motherboard of the device 102. For example, power controller 132 may be interconnected with multicore processor 124, for example, via one or more suitable interconnects and/or interfaces, e.g., via an interface 134.

In some demonstrative aspects, power controller 132 may include, or may be implemented, partially or entirely, by circuitry and/or logic. Additionally or alternatively, one or more functionalities of power-setting controller 140 may be implemented by logic, which may be executed by a machine and/or one or more processors, e.g., as described below.

In other aspects, power controller 132 may be implemented as part of any other, dedicated or non-dedicated, element of computing device 102.

In some demonstrative aspects, power controller 132 may be configured to implement one or more operations and/or functionalities of a thermal management and/or control mechanism, for example, to manage and/or control a temperature of cores 140, e.g., as described below.

In some demonstrative aspects, power controller 132 may be configured to implement one or more operations and/or functionalities of a thermal throttling mechanism, which may be configured, for example, to control and/or manage a temperature of cores 140, e.g., as described below.

In some demonstrative aspects, the thermal throttling mechanism may be configured to control and/or manage a temperature of cores 140, for example, by frequency throttling, voltage throttling, and/or any other throttling technique.

In some demonstrative aspects, power controller 132 may be configured to implement one or more operations and/or functionalities of a thermal throttling mechanism, which may be configured, for example, to provide a technical solution to support a thermal management and/or control mechanism, for example, to maintain thermal limits of a platform, e.g., computing device 102, for example, even without substantially sacrificing performance of the platform.

In some demonstrative aspects, power controller 132 may be configured to implement one or more operations and/or functionalities of a thermal throttling mechanism, which may be configured, for example, to provide a technical solution to support a thermal management and/or control mechanism, for example, to manage a temperature of cores 140, e.g., as described below.

In some demonstrative aspects, power controller 132 may be configured to control thermal throttling of one or more of cores 140, for example, based on temperature measurement information corresponding to the plurality of cores 140, e.g., as described below.

In some demonstrative aspects, multicore processor 124 may include a plurality of temperature sensors 150, which may be configured to provide a plurality of temperature measurements 160 corresponding to the plurality of cores 140, e.g., as described below.

For example, a temperature sensor 150 corresponding to a core 140 may be configured to measure a temperature of the core 140, and to provide a temperature measurement 160 corresponding to the core 140.

In some demonstrative aspects, the plurality of temperature sensors 150 may include one or more Digital Thermal Sensors (DTS). In one example, a DTS may be located in each core 140.

In other aspects, the plurality of temperature sensors 150 may include any other additional or alternative type and/or arrangement of temperature sensors.

In some demonstrative aspects, power controller 132 may be configured to control thermal throttling of one or more of cores 140, for example, based on the plurality of temperature measurements 160, for example, according to at least one temperature threshold, e.g., as described below.

In some demonstrative aspects, the at least one temperature threshold may be configured and/or defined, for example, based on one or more maximal temperature limits for operation of the multicore processor 124.

In some demonstrative aspects, the at least one temperature threshold may include, for example, a maximal Thermal Junction Temperature (Tjmax), e.g., as described below.

In other aspects, any other additional or alternative temperature threshold may be implemented.

In some demonstrative aspects, for example, in some use cases, scenarios, and/or implementations, it may not be advantageous to implement a thermal throttling mechanism, which is configured to collectively manage the thermal-throttling of all cores of a multicore processor, e.g., such that all cores are thermally-throttled together, e.g., as described below.

For example, in some use cases, scenarios, and/or implementations, it may not be advantageous to implement a thermal throttling mechanism, which is configured to collectively thermally-throttle all cores of a multicore, for example, even when only some of the cores have reached the temperature threshold, e.g., as described below.

For example, in some use cases, scenarios, and/or implementations, it may not be advantageous to implement a thermal throttling mechanism, which is configured to collectively thermally-throttle all cores of a multicore, for example, even when there are one or more cores, which have not yet reached the temperature threshold, e.g., as described below.

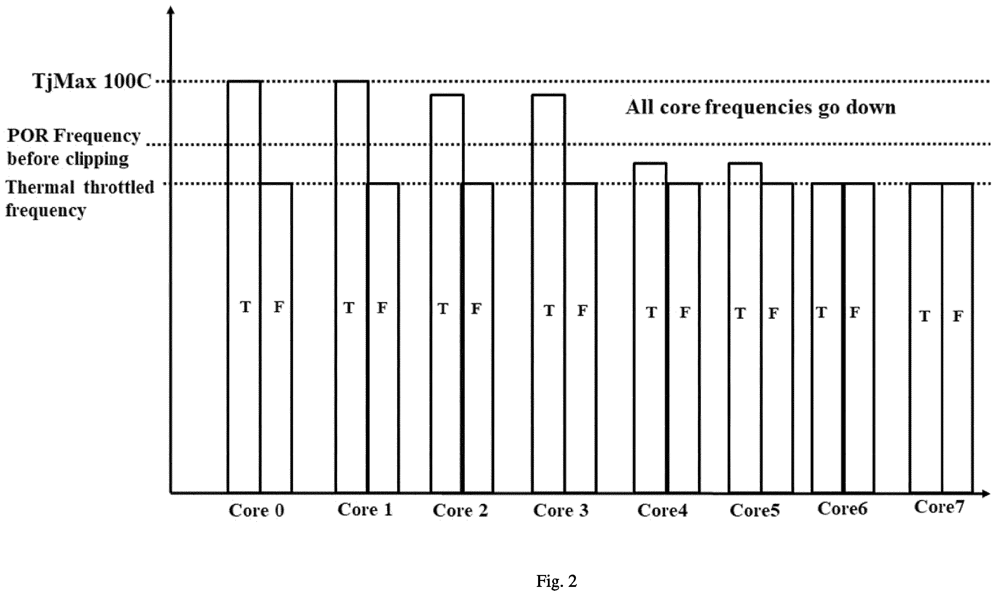

Reference is made to Fig. 2, which schematically illustrates a graph depicting temperatures and frequencies of a plurality of cores of a multicore processor in case throttling is applied to all of the cores together, to illustrate one or more technical aspects, which may be addressed in accordance with some demonstrative aspects.

For example, as shown in Fig. 2, a multicore processor may include eight cores, denoted *Core0, Core1, ..., Core 7.*

For example, as shown in Fig. 2, a temperature threshold, e.g., *Tjmax,* may be set for the multicore processor. For example, as shown in Fig. 2, the temperature threshold may be set to *Tjmax=100* degrees Celsius (C).

For example, as shown in Fig. 2, thermal-throttling may be activated for all cores, e.g., collectively, for example, once at least one of the cores has reached the temperature threshold.

For example, as shown in Fig. 2, the thermal-throttling may be activated for all cores, for example, even for cores, which are under the temperature threshold.

For example, as shown in Fig. 2, the thermal-throttling may be activated for all cores, for example, by reducing a frequency of all cores, e.g., collectively.

For example, as shown in Fig. 2, although only two cores, e.g., the cores *Core0* and *Core1,* have actually reached the temperature threshold of *Tjmax=100C,* thermal-throttling may be applied to all eight cores.

For example, as shown in Fig. 2, the collective thermal-throttling of all of the eight cores may result in the collective reduction of the frequency of all eight cores to a same thermal-throttling frequency.

For example, as shown in Fig. 2, the collective thermal-throttling of all of the eight cores may result in the reduction of the frequency of cores, which have actually not reached the temperature threshold of *Tjmax=100C,* e.g., the cores *Core2, Core3, Core4, Core5, Core6,* and *Core 7.*

For example, as shown in Fig. 2, the collective thermal-throttling of all of the eight cores, e.g., in a situation where only some of the cores have reaches the temperature threshold, may unnecessarily penalize cores, e.g., the cores *Core2, Core3, Core4, Core5, Core6,* and *Core7,* which were actually not at the temperature limit.

For example, this reduction of the frequency of cores, which have actually not reached the temperature threshold of *Tjmax=100C,* may result in degraded performance of the multicore processor.

Referring back to Fig. 1, in some demonstrative aspects, power controller 132 may be configured to implement one or more operations and/or functionalities of a selective thermal throttling mechanism, which may be configured, for example, to provide a technical solution to support selective thermal throttling of one or more cores 140, e.g., as described below.

In some demonstrative aspects, power controller 132 may be configured to implement one or more operations and/or functionalities of a per-core thermal throttling mechanism, which may be configured, for example, to provide a technical solution to support thermal throttling of one or more cores 140, for example, on a per-core basis, e.g., as described below.

In some demonstrative aspects, power controller 132 may be configured to implement one or more operations and/or functionalities of a selective thermal throttling mechanism, which may be configured, for example, to support selective thermal throttling of one or more selected cores 140, for example, while one or more other cores 140 may be allowed to remain in a non-throttled mode, e.g., as described below.

In some demonstrative aspects, power controller 132 may be configured to detect, e.g., to uniquely detect, a core 140, for example, based on a temperature limit, which may correspond to the core 140, e.g., as described below.

In some demonstrative aspects, power controller 132 may be configured to thermally-throttle, e.g., uniquely thermally-throttle, the detected core 140, to achieve improved performance, e.g., maximal performance.

In some demonstrative aspects, the per-core thermal throttling mechanism may be implemented to selectively thermally-throttle one or more detected cores 140, which have actually reached their thermal limits, for example, while selectively refraining from thermally-throttling one or more non-detected cores 140, which have not reached their thermal limits, e.g., as described below.

In some demonstrative aspects, the per-core thermal throttling mechanism may be implemented, for example, to provide a technical solution to allow the cores 140, which are under their temperature threshold, to remain at relatively high frequencies, e.g., turbo frequencies.

In some demonstrative aspects, the per-core thermal throttling mechanism may be implemented, for example, to provide a technical solution to support additional turbo residency, which may be achieved, for example, from the one or more cores 140, which have not yet reached their thermal limit, e.g., as described below.

In some demonstrative aspects, the per-core thermal throttling mechanism may be implemented, for example, to provide a technical solution to support higher achieved frequency residency, for example, while retaining system stability, e.g., maximum system stability, e.g., as described below.

In some demonstrative aspects, the per-core thermal throttling mechanism may be implemented, for example, to provide a technical solution to extract more performance, e.g., in terms of frequency, from the multicore processor 124, for example, on a per-core basis, e.g., as described below.

In some demonstrative aspects, power controller 132 may be configured to allow a user of the computing device 102 to set at least one temperature threshold to be used for controlling the thermal-throttling of the cores 140, e.g., as described below.

In some demonstrative aspects, power controller 132 may be configured to allow the user of the computing device 102 to set at least one temperature threshold at which thermal-throttling is to be initiated for a specific core 140, e.g., as described below.

In some demonstrative aspects, power controller 132 may be configured to allow the user of the computing device 102 to set a common (collective) temperature threshold to be collectively used for controlling the thermal-throttling of all the cores 140 on a per-core basis, e.g., as described below.

In some demonstrative aspects, power controller 132 may be configured to allow the user of the computing device 102 to set a group temperature threshold to be collectively used for controlling the thermal-throttling for a group, e.g., a subset, of the cores 140, e.g., as described below.

In some demonstrative aspects, power controller 132 may be configured to allow the user of the computing device 102 to set a per-core temperature threshold to be used for controlling the thermal-throttling of a core 140, for example, on a per-core basis, e.g., as described below.

In some demonstrative aspects, power controller 132 may be configured to allow the user of the computing device 102 to set the temperature threshold to be used for controlling the thermal-throttling of the cores 140, for example, to provide a technical solution to support users, e.g., sophisticated users, enthusiasts, "Over-Clockers" (OC), or the like, to fine-tune the thermal-throttling of the cores 140, for example, based on unique system capabilities, unique cooling capabilities, or the like, for example, to achieve improved performance.

In some demonstrative aspects, power controller 132 may be configured to utilize a User Interface (UI), e.g., a Basic-Input/Output-System (BIOS) UI, for example, to allow the user of the computing device 102 to set a user-specified per-core temperature limit, e.g., as described below.

In some demonstrative aspects, power controller 132 may be configured to use the user-specified per-core temperature limit to selectively reduce the frequency of one or more cores 140, e.g., as described below.

In some demonstrative aspects, power controller 132 may be configured to selectively reduce the frequency of one or more cores 140, which have reached the user-specified per-core temperature limit, for example, while allowing one or more other cores 140, which have not reached the user-specified per-core temperature limit, to operate at their intended frequency, e.g., as described below.

For example, allowing the user of computing device 102 to set the user-specified per-core temperature limit may provide a technical solution to support the user to get the most out of each core 140 of the computing device 102.

In some demonstrative aspects, power controller 132 may be configured to process temperature measurement information to identify the plurality of temperature measurements 160 corresponding to the plurality of cores 140, e.g., as described below.

In some demonstrative aspects, power controller 132 may be configured to receive the temperature measurement information, for example, via a suitable interface 134.

For example, the interface 134 may include a suitable input to receive the temperature measurement information.

In some demonstrative aspects, the temperature measurement information may include the plurality of temperature measurements 160.

In other aspects, the temperature measurement information may include information based on the plurality of temperature measurements 160, and/or information which may indicate, or may represent, the plurality of temperature measurements 160.

In some demonstrative aspects, power controller 132 may be configured to identify one or more selected cores 140 to be thermally-throttled, for example, based on the plurality of temperature measurements 160, e.g., as described below.

In some demonstrative aspects, power controller 132 may be configured to trigger thermal throttling of the one or more selected cores, e.g., as described below.

In some demonstrative aspects, power controller 132 may be configured to trigger thermal throttling of the one or more selected cores, for example, while allowing one or more non-selected cores of the plurality of cores 140 to remain non-thermally-throttled, e.g., as described below.

In some demonstrative aspects, power controller 132 may be configured to trigger thermal throttling of the one or more selected cores, for example, by providing suitable control signals, e.g., control signals 171 and/or 173, to the one or more selected cores.

For example, the interface 134 may include a suitable control interface and/or an output to provide control signals from the power controller 132 to the cores 140.

In some demonstrative aspects, power controller 132 may be configured to trigger the thermal throttling of only the one or more selected cores, e.g., as described below.

In some demonstrative aspects, power controller 132 may be configured to trigger the thermal throttling of the one or more selected cores, for example, by triggering a frequency throttling of the one or more selected cores.

In some demonstrative aspects, power controller 132 may be configured to trigger the thermal throttling of the one or more selected cores, for example, by triggering a voltage throttling of the one or more selected cores.

In other aspects, power controller 132 may be configured to trigger the thermal throttling of the one or more selected cores, for example, by triggering any other additional or alternative suitable techniques, operations and/or functionalities.

In some demonstrative aspects, power controller 132 may be configured to identify the one or more selected cores to be thermally-throttled, for example, based on a comparison between the plurality of temperature measurements 160 and at least one temperature threshold, e.g., as described below.

In some demonstrative aspects, power controller 132 may be configured to determine whether a core of the plurality of cores 140 is to be identified as a selected core to be thermally-throttled, for example, based on a comparison between a temperature measurement corresponding to the core and a temperature threshold, e.g., as described below.

In some demonstrative aspects, the temperature threshold may include a maximal Thermal Junction Temperature (*Tjmax*).

In other aspects, any other additional or alternative thermal threshold may be used.

In some demonstrative aspects, the temperature threshold may include a core-specific temperature threshold corresponding to the core.

For example, a first core-specific temperature threshold may be defined for a first core 141, and a second core-specific temperature threshold may be defined for a first core 143.

For example, the first core-specific temperature defined for the first core 141 may be different from the second core-specific temperature defined for the second core 143.

In one example, a first core-specific temperature threshold, e.g., *Tjmax1=100C,* may be defined for the first core 141, and/or a second core-specific temperature threshold, e.g., *Tjmax2=103C,* may be defined for the second core 143.

In another example, a first core-specific temperature threshold, e.g., *Tjmax1=106C,* may be defined for the first core 141, and/or a second core-specific temperature threshold, e.g., *Tjmax2=98C,* may be defined for the second core 143.

For example, the first core-specific temperature threshold defined for the first core 141 may be equal to the second core-specific temperature threshold defined for the second core 143.

In one example, a first core-specific temperature threshold, e.g., *Tjmax1=100.5C,* may be defined for the first core 141, and/or a second core-specific temperature threshold, e.g., *Tjmax2=100.5C,* may be defined for the second core 143.

In some demonstrative aspects, the temperature threshold may include a multiple-core temperature threshold corresponding to two or more cores 140.

In one example, a first multiple-core temperature threshold, e.g., *Tjmax1=102C,* may be defined for a group of two or more cores, e.g., including the first core 141.

In another example, a second multiple-core temperature threshold, e.g., *Tjmax2=98C,* may be defined for another group of two or more cores 140, e.g., including the second core 143.

In another example, a multiple-core temperature threshold, e.g., *Tjmax1=106C,* may be defined for a group of two or more cores, e.g., including the first core 141; and a core-specific temperature threshold, e.g., *Tjmax2=109C,* may be defined for the second core 143.

In some demonstrative aspects, the temperature threshold may include a global temperature threshold to be applied for all cores in the plurality of cores 140, e.g., on a per-core basis.

In one example, a global temperature threshold, e.g., *Tjmax=100C,* may be defined for all cores in the plurality of cores 140.

In some demonstrative aspects, power controller 132 may be configured to allow the user of computing device 102 to configure one or more temperature thresholds to be utilized by the power controller 132 for the thermal throttling of the plurality of cores 104, e.g., as described below.

In some demonstrative aspects, power controller 132 may be configured to identify the temperature threshold, for example, based on a user input 182 from a User Interface (UI) 181, e.g., as described below.

In some demonstrative aspects, UI 181 may include a BIOS UI, e.g., as described below.

In other aspects, UI 181 may be implemented by any other type of UI.

In some demonstrative aspects, power controller 132 may be configured to identify a user-selected threshold setting from a plurality of predefined threshold settings, for example, based on the user input 182, e.g., as described below.

In some demonstrative aspects, power controller 132 may be configured to determine the temperature threshold for the core, for example, based on the identified user-selected threshold setting.

In one example, the UI 181 may be configured to provide to the user of computing device 102 a plurality of selection options corresponding to the plurality of predefined threshold settings. For example, the UI 181 may be configured to receive from the user of computing device 102 a user input 182 to indicate, which of the plurality of predefined threshold settings has been selected by the user.

In some demonstrative aspects, the plurality of predefined threshold settings may include, for example, a global threshold setting, and/or a per-core threshold setting.

For example, the global threshold setting may be utilized define a same temperature threshold for all cores 140.

For example, the per-core threshold setting may be utilized to define two or more temperature thresholds for two or more respective cores 140.

In other aspects, the plurality of predefined threshold settings may include any other additional or alternative temperature threshold settings to be applied for thermal-throttling of the cores 140.

In some demonstrative aspects, power controller 132 may be configured to utilize a temperature threshold, which may include a predefined temperature threshold. For example, the predefined temperature threshold may be preconfigured, for example, by a manufacturer of the multicore processor 124, by a technician, e.g., at a lab, and/or according to any other suitable preconfigured setting.

In some demonstrative aspects, power controller 132 may be configured to determine that a core 140 is to be identified as a selected core, which is to be thermally-throttled, for example, based on a determination that the temperature measurement 160 corresponding to the core 140 is higher than the temperature threshold to be applied for the core 140, e.g., as described below.

In some demonstrative aspects, power controller 132 may be configured to determine that a core 140 is to be identified as a non-selected core, which is not to be thermally-throttled, for example, based on a determination that the temperature measurement 160 corresponding to the core is lower than the temperature threshold to be applied for the core 140, e.g., as described below.

In some demonstrative aspects, power controller 132 may be configured to identify a first core 141 of the plurality of cores 140 as a selected core, which is to be thermally-throttled, for example, based on a determination that a first temperature measurement 161 corresponding to the first core 141 is above a first temperature threshold for the first core 141.

In some demonstrative aspects, power controller 132 may be configured to identify a second core 143 of the plurality of cores 140 as a non-selected core, which is not to be thermally-throttled, for example, based on a determination that a second temperature measurement 163 corresponding to the second core 143 is below a second temperature threshold for the second core 143.

In some demonstrative aspects, the first temperature threshold for the first core 141 may be equal to the second temperature threshold for the second core 143, e.g., as described above.

In some demonstrative aspects, the first temperature threshold for the first core 141 may be different from the second temperature threshold for the second core 143, e.g., as described above.

In some demonstrative aspects, power controller 132 may be configured to trigger thermal throttling of the first core 141, for example, based on the determination that a first temperature measurement 161 corresponding to the first core 141 is above a first temperature threshold for the first core 141, for example, while allowing the second core 143 to remain non-thermally-throttled, for example, based on the determination, for example, based on a determination that a second temperature measurement 163 corresponding to the second core 143 is below a second temperature threshold for the second core 143.

In some demonstrative aspects, power controller 132 may be configured to monitor per-core temperatures of the plurality of cores 140, for example, based on the plurality of temperature measurements 160, e.g., as described above.

In some demonstrative aspects, power controller 132 may be configured to selectively reduce (throttle) the frequency of any core that is identified to be over the temperature threshold limit, for example, while preserving the performance of the other cores 140, e.g., which have not been not identified to have reached their temperature threshold limit(s), e.g., as described above.

In some demonstrative aspects, power controller 132 may be configured to detect a specific core 140 that has reached the per-core throttle limit, e.g., based on the temperature measurement 160 corresponding to the specific core, and to reduce (throttle) the frequency of that specific core, for example, while allowing other cores 140, which have not reached the per-core throttle limit, to continue operating at their intended frequencies, for example, to improve performance, e.g., as described above.

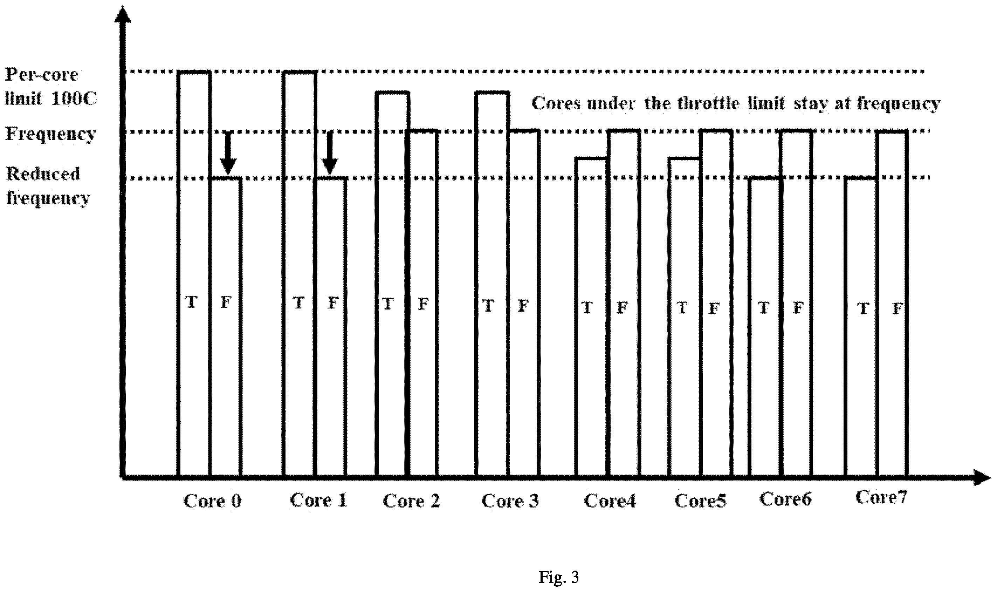

Reference is made to Fig. 3, which schematically illustrate a graph depicting temperatures and frequencies of a plurality of cores of a multicore processor according to a selective thermal throttling scheme, in accordance with some demonstrative aspects.

In some demonstrative aspects, a power controller of the multicore processor, e.g., power controller 132 (Fig. 1), may be configured to control power management for the multicore processor including eight cores, denoted *Core0, Core1, ..., Core 7.*

In some demonstrative aspects, as shown in Fig. 3, a per-core temperature threshold, e.g., *Tjmax,* may be set as a global per-core temperature threshold for thermal-throttling of the multicore processor on a per-core basis, e.g., as described above.

For example, as shown in Fig. 3, the global per-core temperature threshold may be set to *Tjmax=100C.*

In some demonstrative aspects, as shown in Fig. 3, the power controller of the multicore processor, e.g., power controller 132 (Fig. 1), may be configured to trigger thermal-throttling of one or more cores on a per-core basis.

In some demonstrative aspects, as shown in Fig. 3, the power controller of the multicore processor, e.g., power controller 132 (Fig. 1), may be configured to activate the thermal-throttling, for example, only for cores, which have reached the per-core temperature threshold.

In some demonstrative aspects, as shown in Fig. 3, the power controller of the multicore processor, e.g., power controller 132 (Fig. 1), may be configured to refrain from activating the thermal-throttling, for example, for cores, which have not reached the per-core temperature threshold.

In some demonstrative aspects, as shown in Fig. 3, the thermal-throttling may be selectively activated on a per-core basis, for example, by reducing a frequency of cores, which have reached the per-core temperature threshold, while maintaining the intended frequency of cores, which have not reached the per-core temperature threshold.

In some demonstrative aspects, as shown in Fig. 3, the power controller of the multicore processor, e.g., power controller 132 (Fig. 1), may be configured to apply thermal-throttling only two cores, e.g., *Core0* and *Core1,* which have actually reached the global per-core temperature threshold of *Tjmax=100C.*

In some demonstrative aspects, as shown in Fig. 3, the power controller of the multicore processor, e.g., power controller 132 (Fig. 1), may be configured to refrain from applying the thermal-throttling to cores, which have actually not reached the global per-core temperature threshold of *Tjmax=100C,* e.g., the cores *Core2, Core3, Core4, Core5, Core6,* and *Core7.*

In some demonstrative aspects, as shown in Fig. 3, the selective thermal-throttling on a per-core basis may result in the selective reduction of the frequency of the only two cores, e.g., *Core0* and *Core1*, which have actually reached the global per-core temperature threshold of *Tjmax=100C.*

In some demonstrative aspects, as shown in Fig. 3, the selective thermal-throttling on a per-core basis may allow to maintain a non-throttled frequency of cores, which have actually not reached the global per-core temperature threshold of *Tjmax=100C,* e.g., the cores *Core2, Core3, Core4, Core5, Core6,* and *Core7.*

In some demonstrative aspects, the selective thermal-throttling on a per-core basis may provide a technical solution to improve performance of the multicore processor, which may be gained, for example, from the cores, which may be allowed to maintain the non-throttled frequency.

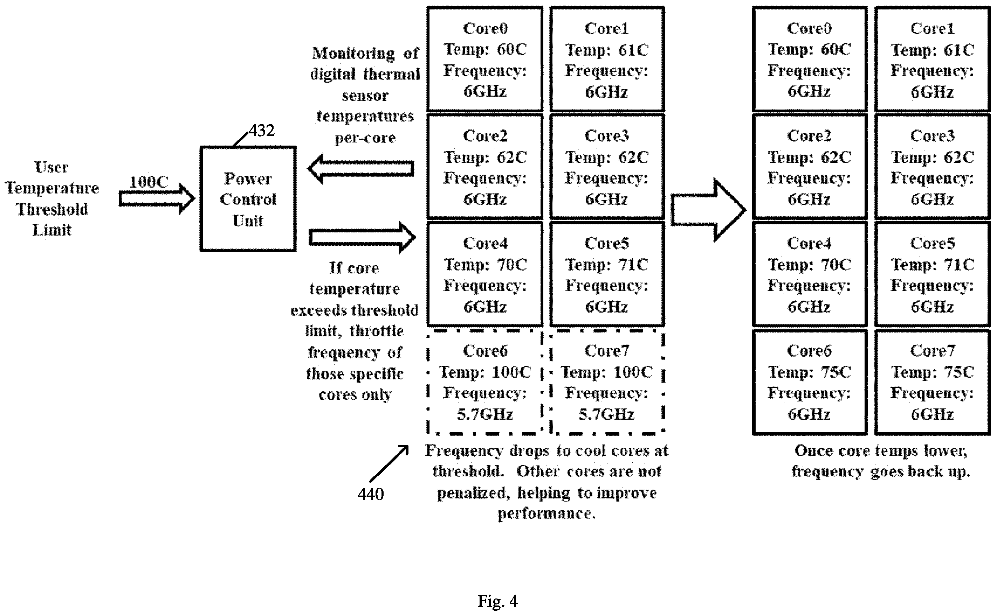

Reference is made to Fig. 4, which schematically illustrates a power controller 432 to control a plurality of cores 440 of a multicore processor according to a selective thermal throttling scheme, in accordance with some demonstrative aspects.

For example, power controller 132 (Fig. 1) may be configured to perform one or more operations and/or functionalities of power controller 432.

In some demonstrative aspects, power controller 432 may be configured to control power management for the multicore processor including eight cores 440, denoted *Core0, Core1, ..., Core 7.*

In some demonstrative aspects, as shown in Fig. 4, power controller 432 may be configured to identify a global per-core temperature threshold, e.g., *Tjmax,* which may be set by a user for thermal-throttling of the multicore processor on a per-core basis, e.g., as described above.

For example, as shown in Fig. 4, the global per-core temperature threshold may be set by the user to *Tjmax=100C.*

In some demonstrative aspects, as shown in Fig. 4, the power controller 432 may be configured to trigger thermal-throttling of one or more cores on a per-core basis.

In some demonstrative aspects, power controller 432 may be configured to monitor per-core temperatures of the plurality of cores, for example, based on temperature measurements for the plurality of cores, e.g., as described above.

In some demonstrative aspects, as shown in Fig. 4, the power controller 432 may be configured to reduce (throttle) the frequency of any core that is identified to be over the global per-core temperature threshold limit, for example, while preserving the performance of the other cores, e.g., which have not been not identified to have reached the global per-core temperature threshold.

In some demonstrative aspects, as shown in Fig. 4, the power controller 432 may be configured to detect a specific core that has reached the global per-core throttle limit, e.g., based on the temperature measurement corresponding to the specific core, and to reduce (throttle) the frequency of that specific core, for example, while allowing other cores, which have not reached the global per-core throttle limit, to continue operating at their intended frequencies, for example, to improve performance.

For example, as shown in Fig. 4, the power controller 432 may detect that temperatures of two cores, e.g., the cores *Core6* and *Core7,* have reached the global per-core throttle limit *Tjmax=100C.*

For example, as shown in Fig. 4, the power controller 432 may selectively trigger thermal-throttling of the two identified cores, e.g., the cores *Core6* and *Core7*, for example, by reducing the operating frequency of these identified cores, e.g., to a frequency of 5.7 Gigahertz (GHz).

For example, as shown in Fig. 4, the power controller 432 may selectively maintain the operating frequencies of the other cores, e.g., the cores *Core0, Core1, Core2, Core3, Core4,* and *Core5,* which have not reached the global per-core throttle limit *Tjmax=100C.*

For example, as shown in Fig. 4, the power controller 432 may selectively maintain the operating frequency of the other cores, e.g., the cores *Core0, Core1, Core2, Core3, Core4,* and *Core5,* at a frequency of 6GHz.

For example, as shown in Fig. 4, the power controller 432 may detect that temperatures of the two cores, e.g., the cores *Core6* and *Core7*, have returned below the global per-core throttle limit *Tjmax=100C.*

For example, as shown in Fig. 4, the power controller 432 may allow the two cores, e.g., the cores *Core6* and *Core7*, to return to the higher operating frequency, e.g., the frequency of 6GHz, for example, based on the determination that the temperatures of the two cores, e.g., the cores *Core6* and *Core7*, have returned below the global per-core throttle limit *Tjmax=100C.*

In some demonstrative aspects, a selective thermal throttling scheme to control thermal throttling of cores of a multicore processor, for example, on a per-core basis, may be implemented to provide a technical solution to support improved performance of the multicore processor, e.g., as follows:

**Table 1**

| Benchmark | Score - Default | Score - Per-Core Throttle Threshold 100C | Gain |
|---|---|---|---|
| A | 13861 | 14072 | 1.54% |
| B | 36637 | 36719 | 0.22% |
| C | 36632 | 36834 | 0.55% |
| D | 22558 | 22849 | 1.29% |
| E | 1:07.10 | 1:06.50 | 0.89% |
| F | 8:15.05 | 8:10.84 | 0.85% |

For example, as shown by Table 1, a performance gain of about 1.55% may be achieved, for example, according to the selective thermal throttling scheme. Other gains may be achieved with respect to other setups, benchmarks.

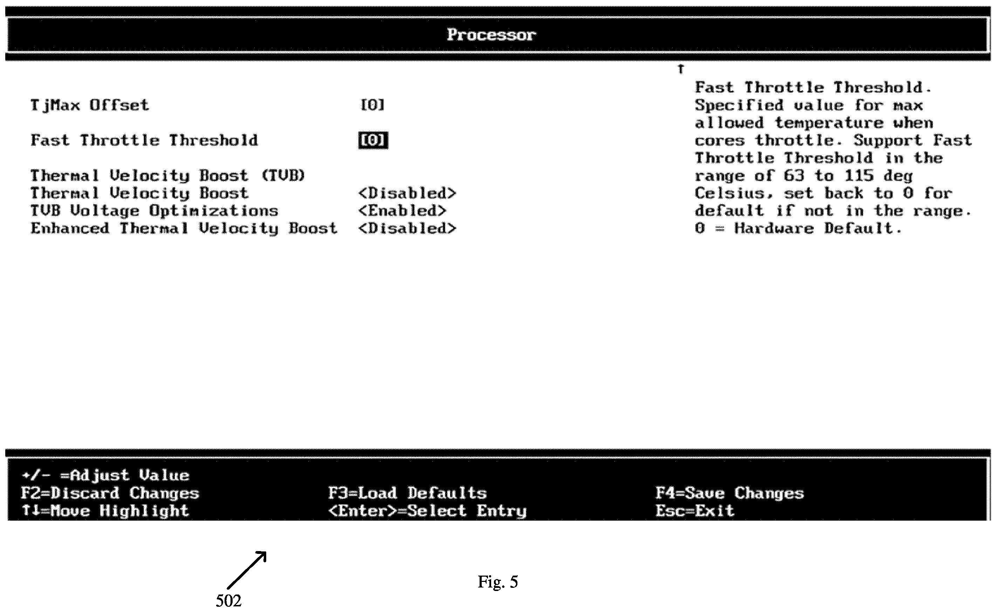

Fig. 5 is a schematic illustration of a UI 502, in accordance with some demonstrative aspects.

In some demonstrative aspects, UI 502 may be configured to allow a user of a computing device including a multicore processor to set a user-specified per-core temperature limit.

For example, a power controller of the computing device, e.g., power controller 132 (Fig. 1), may be configured to utilize UI 502, e.g., as UI 181 (Fig. 1), for example, to allow the user of the computing device 102 (Fig. 1) to set a user-specified per-core temperature limit, e.g., as described above.

In some demonstrative aspects, as shown in Fig. 5, the UI 502 may be configured to allow the user to configure a user-specific temperature limit to be utilized by the power controller of the computing device, e.g., power controller 132 (Fig. 1).

In some demonstrative aspects, as shown in Fig 5, UI 502 may include a BIOS UI.

In some demonstrative aspects, UI 502 may be configured to utilize a BIOS to P-code mailbox, for example, to program the user-specific temperature limit.

In other aspects, UI 502 may be implemented by any other type of UI.

In some demonstrative aspects, as shown in Fig. 5, the UI 502 may be configured to provide the user with an option to enter a global per-core temperature limit ("Fast Throttle Threshold"), which is to be utilized by the power controller of the computing device, e.g., power controller 132 (Fig. 1), as described above.

In some demonstrative aspects, as shown in Fig. 5, the UI 502 may be configured to provide the user with an option to set the global per-core temperature limit ("Fast Throttle Threshold") to a value, for example, within a predefined range of temperature values, e.g., between 63C and 115C.

In some demonstrative aspects, as shown in Fig. 5, the UI 502 may be configured to provide the user with an option to set the global per-core temperature limit ("Fast Throttle Threshold"), e.g., as described above.

In other aspects, the UI 502 may be configured to provide the user with an option to set any other additional or alternative user-selected temperature threshold setting, for example, a core-specific temperature threshold, a multiple-core temperature threshold, and/or any other temperature threshold, e.g., as described above.

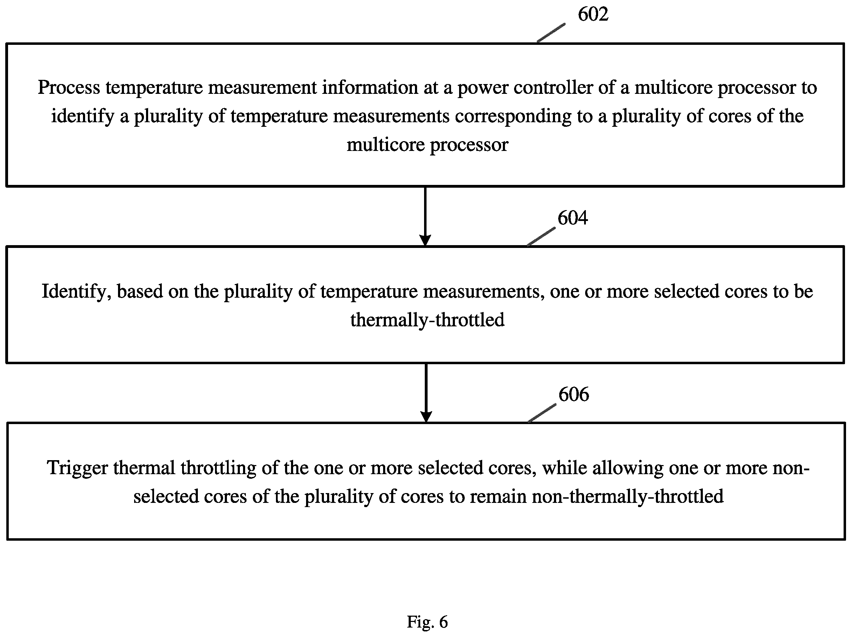

Reference is made to Fig. 6, which schematically illustrates a method multicore processor power control, in accordance with some demonstrative aspects. For example, one or more of the operations of the method of Fig. 6 may be performed by a power controller, e.g., a power controller 132 (Fig. 1); and/or a multicore processor, e.g., multicore processor 124 (Fig. 1).

As indicated at block 602, the method may include processing temperature measurement information at a power controller of a multicore processor, for example, to identify a plurality of temperature measurements corresponding to a plurality of cores of the multicore processor. For example, power controller 132 (Fig. 1) may be configured to process temperature measurement information to identify the plurality of temperature measurements 160 (Fig. 1) corresponding to the plurality of cores 140 (Fig. 1), e.g., as described above.

As indicated at block 604, the method may include identifying one or more selected cores to be thermally-throttled, for example, based on the plurality of temperature measurements. For example, power controller 132 (Fig. 1) may be configured to identify one or more selected cores 140 (F9g. 1) to be thermally-throttled, for example, based on the plurality of temperature measurements 160 (Fig. 1), e.g., as described above.

As indicated at block 606, the method may include triggering thermal throttling of the one or more selected cores, for example, while allowing one or more non-selected cores of the plurality of cores to remain non-thermally-throttled. For example, power controller 132 (Fig. 1) may be configured to trigger thermal throttling of the one or more selected cores, for example, while allowing one or more non-selected cores of the plurality of cores 140 (Fig. 1) to remain non-thermally-throttled, e.g., as described above.

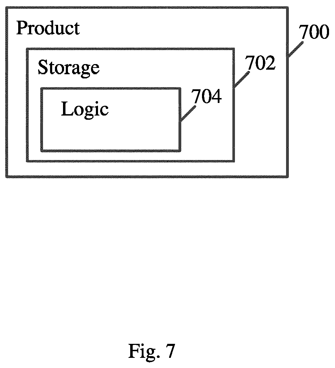

Reference is made to Fig. 7, which schematically illustrates a product of manufacture 700, in accordance with some demonstrative aspects. Product 700 may include one or more tangible computer-readable ("machine-readable") non-transitory storage media 702, which may include computer-executable instructions, e.g., implemented by logic 704, operable to, when executed by at least one computer processor, enable the at least one computer processor to implement one or more operations at computing device 102 (Fig. 1), multicore processor 124 (Fig. 1), and/or power controller 132 (Fig. 1); to cause computing device 102 (Fig. 1), multicore processor 124 (Fig. 1), and/or power controller 132 (Fig. 1) to perform, trigger and/or implement one or more operations and/or functionalities; and/or to perform, trigger and/or implement one or more operations and/or functionalities described with reference to the Figs. 1-6, and/or one or more operations described herein. The phrases "non-transitory machine-readable medium" and "computer-readable non-transitory storage media" may be directed to include all machine and/or computer readable media, with the sole exception being a transitory propagating signal.

In some demonstrative aspects, product 700 and/or machine readable storage media 702 may include one or more types of computer-readable storage media capable of storing data, including volatile memory, non-volatile memory, removable or non-removable memory, erasable or non-erasable memory, writeable or re-writeable memory, and the like. For example, machine readable storage media 702 may include, RAM, DRAM, Double-Data-Rate DRAM (DDR-DRAM), SDRAM, static RAM (SRAM), ROM, programmable ROM (PROM), erasable programmable ROM (EPROM), electrically erasable programmable ROM (EEPROM), flash memory (e.g., NOR or NAND flash memory), content addressable memory (CAM), polymer memory, phase-change memory, ferroelectric memory, silicon-oxide-nitride-oxide-silicon (SONOS) memory, a hard drive, an optical disk, a magnetic disk, and the like. The computer-readable storage media may include any suitable media involved with downloading or transferring a computer program from a remote computer to a requesting computer carried by data signals embodied in a carrier wave or other propagation medium through a communication link, e.g., a modem, radio or network connection.

In some demonstrative aspects, logic 704 may include instructions, data, and/or code, which, if executed by a machine, may cause the machine to perform a method, process and/or operations as described herein. The machine may include, for example, any suitable processing platform, computing platform, computing device, processing device, computing system, processing system, computer, processor, or the like, and may be implemented using any suitable combination of hardware, software, firmware, and the like.

In some demonstrative aspects, logic 704 may include, or may be implemented as, software, a software module, an application, a program, a subroutine, instructions, an instruction set, computing code, words, values, symbols, and the like. The instructions may include any suitable type of code, such as source code, compiled code, interpreted code, executable code, static code, dynamic code, and the like. The instructions may be implemented according to a predefined computer language, manner or syntax, for instructing a processor to perform a certain function. The instructions may be implemented using any suitable high-level, low-level, object-oriented, visual, compiled and/or interpreted programming language, machine code, and the like.

### EXAMPLES

The following examples pertain to further aspects.

Example 1 includes a multicore processor comprising a plurality of cores; and a power controller configured to control a power of the multicore processor, wherein the power controller is configured to process temperature measurement information to identify a plurality of temperature measurements corresponding to the plurality of cores; identify, based on the plurality of temperature measurements, one or more selected cores of the plurality of cores to be thermally-throttled; and trigger thermal throttling of the one or more selected cores, while allowing one or more non-selected cores of the plurality of cores to remain non-thermally-throttled.

Example 2 includes the subject matter of Example 1, and optionally, wherein the power controller is configured to determine whether a core of the plurality of cores is to be identified as a selected core to be thermally-throttled based on a comparison between a temperature measurement corresponding to the core and a temperature threshold.

Example 3 includes the subject matter of Example 2, and optionally, wherein the power controller is configured to determine that the core is to be identified as the selected core to be thermally-throttled based on a determination that the temperature measurement corresponding to the core is higher than the temperature threshold.

Example 4 includes the subject matter of Example 2 or 3, and optionally, wherein the power controller is configured to determine that the core is to be identified as a non-selected core to not be thermally-throttled based on a determination that the temperature measurement corresponding to the core is lower than the temperature threshold.

Example 5 includes the subject matter of any one of Examples 2-4, and optionally, wherein the temperature threshold comprises a core-specific temperature threshold corresponding to the core.

Example 6 includes the subject matter of any one of Examples 2-4, and optionally, wherein the temperature threshold comprises a multiple-core temperature threshold corresponding to two or more cores of the plurality of cores.

Example 7 includes the subject matter of any one of Examples 2-4, and optionally, wherein the temperature threshold comprises a global temperature threshold to be applied for the plurality of cores, e.g., for all cores in the plurality of cores.

Example 8 includes the subject matter of any one of Examples 2-7, and optionally, wherein the power controller is configured to identify the temperature threshold based on a user input from a User Interface (UI).

Example 9 includes the subject matter of Example 8, and optionally, wherein the power controller is configured to identify, based on the user input, a user-selected threshold setting from a plurality of predefined threshold settings, and to determine the temperature threshold for the core based on the user-selected threshold setting.

Example 10 includes the subject matter of Example 9, and optionally, wherein the plurality of predefined threshold settings comprises at least one of a global threshold setting, or a per-core threshold setting, wherein the global threshold setting is to define a same temperature threshold for the plurality of cores, e.g., for all cores, wherein the per-core threshold setting is to define two or more temperature thresholds for two or more respective cores of the plurality of cores.

Example 11 includes the subject matter of any one of Examples 2-10, and optionally, wherein the temperature threshold comprises a predefined temperature threshold.

Example 12 includes the subject matter of any one of Examples 2-11, and optionally, wherein the temperature threshold comprises a maximal Thermal Junction Temperature (Tjmax).

Example 13 includes the subject matter of any one of Examples 1-12, and optionally, wherein the power controller is configured to identify a first core of the plurality of cores as a selected core based on a determination that a first temperature measurement corresponding to the first core is above a first temperature threshold for the first core; identify a second core of the plurality of cores as a non-selected core based on a determination that a second temperature measurement corresponding to the second core is below a second temperature threshold for the second core; and trigger thermal throttling of the first core, while allowing the second core to remain non-thermally-throttled.

Example 14 includes the subject matter of Example 13, and optionally, wherein the first temperature threshold for the first core is equal to the second temperature threshold for the second core.

Example 15 includes the subject matter of Example 13, and optionally, wherein the first temperature threshold for the first core is different from the second temperature threshold for the second core.

Example 16 includes the subject matter of any one of Examples 1-15, and optionally, wherein the power controller is configured to identify the one or more selected cores to be thermally-throttled based on a comparison between the plurality of temperature measurements and at least one temperature threshold.

Example 17 includes the subject matter of any one of Examples 1-16, and optionally, wherein the power controller is configured to trigger the thermal throttling of some of the plurality of cores, e.g., only the one or more selected cores.

Example 18 includes the subject matter of any one of Examples 1-17, and optionally, wherein the power controller is configured to trigger the thermal throttling of the one or more selected cores by triggering a frequency throttling of the one or more selected cores.

Example 19 includes the subject matter of any one of Examples 1-18, and optionally, wherein the power controller is configured to trigger the thermal throttling of the one or more selected cores by triggering a voltage throttling of the one or more selected cores.

Example 20 includes the subject matter of any one of Examples 1-19, and optionally, comprising a plurality of temperature sensors to provide the plurality of temperature measurements corresponding to the plurality of cores.

Example 21 includes a computing device comprising a multicore processor comprising a plurality of cores; and a power controller configured to control a power of the multicore processor, wherein the power controller is configured to process temperature measurement information to identify a plurality of temperature measurements corresponding to the plurality of cores; identify, based on the plurality of temperature measurements, one or more selected cores of the plurality of cores to be thermally-throttled; and trigger thermal throttling of the one or more selected cores, while allowing one or more non-selected cores of the plurality of cores to remain non-thermally-throttled; and at least one memory to store information processed by the multicore processor.

Example 22 includes the subject matter of Example 21 and, optionally, comprising the subject matter of any of Examples 1-20.

Example 23 includes an apparatus comprising an input to receive temperature measurement information corresponding to a multicore processor; and a power controller configured to control a power of the multicore processor, wherein the power controller is configured to process the temperature measurement information to identify a plurality of temperature measurements corresponding to a plurality of cores of the multicore processor; identify, based on the plurality of temperature measurements, one or more selected cores of the plurality of cores to be thermally-throttled; and trigger thermal throttling of the one or more selected cores, while allowing one or more non-selected cores of the plurality of cores to remain non-throttled.

Example 24 includes the subject matter of Example 23 and, optionally, comprising the subject matter of any of Examples 1-20.

Example 25 comprises a computing device comprising the subject matter of any one of Examples 1-20.

Example 26 comprises a mobile device comprising the subject matter of any one of Examples 1-20.

Example 27 comprises an apparatus comprising means for executing any of the described operations of Examples 1-20.

Example 28 comprises a product comprising one or more tangible computer-readable non-transitory storage media comprising instructions operable to, when executed by at least one processor, enable the at least one processor to cause a device to perform any of the described operations of Examples 1-20.

Example 29 comprises an apparatus comprising: a memory interface; and processing circuitry configured to: perform any of the described operations of Examples 1-20.

Example 30 comprises a method comprising any of the described operations of Examples 1-20.

Functions, operations, components and/or features described herein with reference to one or more aspects, may be combined with, or may be utilized in combination with, one or more other functions, operations, components and/or features described herein with reference to one or more other aspects, or vice versa.

While certain features have been illustrated and described herein, many modifications, substitutions, changes, and equivalents may occur to those skilled in the art. It is, therefore, to be understood that the appended claims are intended to cover all such modifications and changes as fall within the true spirit of the disclosure.

## Claims

1. A multicore processor comprising:
a plurality of cores; and
a power controller configured to control a power of the multicore processor, wherein the power controller is configured to:
process temperature measurement information to identify a plurality of temperature measurements corresponding to the plurality of cores;
identify, based on the plurality of temperature measurements, one or more selected cores of the plurality of cores to be thermally-throttled; and
trigger thermal throttling of the one or more selected cores, while allowing one or more non-selected cores of the plurality of cores to remain non-thermally-throttled.

2. The multicore processor of claim 1, wherein the power controller is configured to determine whether a core of the plurality of cores is to be identified as a selected core to be thermally-throttled based on a comparison between a temperature measurement corresponding to the core and a temperature threshold.

3. The multicore processor of claim 2, wherein the power controller is configured to determine that the core is to be identified as the selected core to be thermally-throttled based on a determination that the temperature measurement corresponding to the core is higher than the temperature threshold.

4. The multicore processor of claim 2 or 3, wherein the power controller is configured to determine that the core is to be identified as a non-selected core to not be thermally-throttled based on a determination that the temperature measurement corresponding to the core is lower than the temperature threshold.

5. The multicore processor of any one of claims 2-4, wherein the temperature threshold comprises a core-specific temperature threshold corresponding to the core, a multiple-core temperature threshold corresponding to two or more cores of the plurality of cores, or a global temperature threshold to be applied to the plurality of cores.

6. The multicore processor of any one of claims 2-5, wherein the power controller is configured to identify the temperature threshold based on a user input from a User Interface (UI).

7. The multicore processor of claim 6, wherein the power controller is configured to identify, based on the user input, a user-selected threshold setting from a plurality of predefined threshold settings, and to determine the temperature threshold for the core based on the user-selected threshold setting.

8. The multicore processor of claim 7, wherein the plurality of predefined threshold settings comprises at least one of a global threshold setting, or a per-core threshold setting, wherein the global threshold setting is to define a same temperature threshold for the plurality of cores, wherein the per-core threshold setting is to define two or more temperature thresholds for two or more respective cores of the plurality of cores.

9. The multicore processor of any one of claims 2-8, wherein the temperature threshold comprises a predefined temperature threshold, or a maximal Thermal Junction Temperature (Tjmax).

10. The multicore processor of any one of claims 1-9, wherein the power controller is configured to:
identify a first core of the plurality of cores as a selected core based on a determination that a first temperature measurement corresponding to the first core is above a first temperature threshold for the first core;
identify a second core of the plurality of cores as a non-selected core based on a determination that a second temperature measurement corresponding to the second core is below a second temperature threshold for the second core; and
trigger thermal throttling of the first core, while allowing the second core to remain non-thermally-throttled.

11. The multicore processor of any one of claims 1-10, wherein the power controller is configured to identify the one or more selected cores to be thermally-throttled based on a comparison between the plurality of temperature measurements and at least one temperature threshold.

12. The multicore processor of any one of claims 1-11, wherein the power controller is configured to trigger the thermal throttling of only the one or more selected cores.

13. The multicore processor of any one of claims 1-12, wherein the power controller is configured to trigger the thermal throttling of the one or more selected cores by triggering a frequency throttling of the one or more selected cores, and/or by triggering a voltage throttling of the one or more selected cores.

14. The multicore processor of any one of claims 1-13 comprising a plurality of temperature sensors to provide the plurality of temperature measurements corresponding to the plurality of cores.

15. A computing device comprising:
the multicore processor of any one of claims 1-14; and
at least one memory to store information processed by the multicore processor.
